**Europäisches Patentamt**

**European Patent Office**

**Office européen des brevets**

(19)

(11) Veröffentlichungsnummer : **0 171 825
B1**

# (12) EUROPÄISCHE PATENTSCHRIFT

(45) Veröffentlichungstag der Patentschrift :
**11.01.89**

(21) Anmeldenummer : **85200835.8**

(22) Anmeldetag : **24.05.85**

(51) Int. Cl.⁴ : **F 02 F   3/02**, F 16 J   1/06

(54) **Leichtmetallkolben für Brennkraftmaschinen.**

(30) Priorität : **14.07.84 DE 3425965**

(43) Veröffentlichungstag der Anmeldung :
**19.02.86 Patentblatt 86/08**

(45) Bekanntmachung des Hinweises auf die Patenterteilung : **11.01.89 Patentblatt 89/02**

(84) Benannte Vertragsstaaten :
**DE FR GB IT**

(56) Entgegenhaltungen :
EP--A-- 0 009 269
US--A-- 1 499 073
US--A-- 1 793 150
US--A-- 3 179 021
US--A-- 3 626 815
"Leichte Kolben für Otto-Motoren", KS-Kolloquium
14.-17.5.1979

(73) Patentinhaber : **KOLBENSCHMIDT Aktiengesellschaft
Christian-Schmidt-Strasse 8/12 Postfach 1351
D-7107 Neckarsulm (DE)**

(72) Erfinder : **Wacker, Erich, Dr.
Hegelmaierstrasse 3
D-7100 Heilbronn (DE)**
Erfinder : **Landau, Ulrich
Blumenstrasse 45
D-7101 Oedheim (DE)**
Erfinder : **Sander, Wilfried
Reutlinger Strasse 60
D-7107 Neckarsulm (DE)**
Erfinder : **Schellmann, Klaus
Im Sparweiss 23
D-7102 Weinsberg (DE)**

(74) Vertreter : **Rieger, Harald, Dr.
Reuterweg 14
D-6000 Frankfurt am Main (DE)**

**Beschreibung**

Die Erfindung betrifft einen Leichtmetallkolben für Brennkraftmaschinen mit geschlossenem Kolbenschaftmantel, mit gegenüber dem runden Kolbenschaftmantel zurückgesetzten Bolzennaben und mit beidseitig der horizontalen Kolbenbolzenebene zurückgesetzten, mit den Bolzennaben verbundenen Schaftwänden, wobei der äußere Abstand der Bolzennaben 60 bis 80 % und die Breite der Kolbenschaftflächen auf der Druck- und Gegendruckseite 70 bis 95 % des Kolbendurchmessers betragen.

Aufgrund der hohen Anforderungen an die Laufeigenschaften moderner schnellaufender Brennkraftmaschinen ist die Fachwelt bestrebt, u. a. das Gewicht von Bauteilen von Brennkraftmaschinen zu senken, weil dadurch nicht nur der Kraftstoffverbrauch verringert und somit ein Anteil an Energieeinsparung geleistet werden kann, sondern auch das Geräusch- und Schwingungsverhalten im Hinblick auf einen angestrebten hohen Fahrkomfort günstig beeinflußt werden. Ein Teil dieser Entwicklungsziele kann durch den Einsatz von leichten Leichtmetallkolben durch deren kleinere oszillierende Massen erreicht werden. Eine Gewichtsreduzierung darf allerdings dabei nicht zu Lasten der Betriebssicherheit und Lebensdauer der Brennkraftmaschine gehen.

Bekanntlich konnten durch moderne Untersuchungsmethoden, wie die Finite-Elemente-Methode, die Festigkeitsgrenzen der konventionellen Leichtmetall-Vollschaftkolben mit minimalen Kolbenschaft- und Kolbenbodendicken ermittelt werden. Daraus entstand der gewichtserleichterte Leichtmetallkolben. Die Reduzierung aller Wanddicken und Innenformkonturen ermöglichte dabei eine Gewichtseinsparung von ca. 10 %. Die Weiterentwicklung hat schließlich zu einem Leichtmetallkolben geführt, bei dem zur Gewichtsersparnis am Kolbenschaft im Bereich der Bolzennaben beidseitig der horizontal verlaufenden Kolbenbolzenebene jeweils eine Aussparung durch geradliniges oder bogenförmiges Zurücksetzen der mit den Bolzennaben verbundenen Kolbenschaftwände vorgesehen ist. Die Bolzennaben sind dabei möglichst weit zur Mitte verschoben, so daß der äußere Abstand der Bolzennaben bis zu 65 % des Kolbendurchmessers beträgt und damit ein sehr kurzer Kolbenbolzen eingesetzt werden kann, der eine Gesamtlänge von 60 % des Kolbendurchmessers besitzt. Der innere Abstand der Bolzennaben ist bis auf 25 % und die Breite der einzelnen Bolzennaben bis auf 22 % des Kolbendurchmessers reduziert. Mit der Verkürzung des Kolbenbolzens und der Breite der Bolzennaben konnte eine deutliche Gewichtsreduzierung von bis zu 20 % gegenüber dem konventionellen Leichtmetall-Vollschaftkolben erzielt werden. Am Ende des Kolbenschafts bleibt die runde Kolbenschaftform erhalten, so daß die Geradführung des Kolbens gewährleistet ist. Trotz des geringen Gewichts besitzt dieser Leichtmetallkolben die gleichen zufriedenstellenden Funktions- und Festigkeitswerte unter allen Betriebsbedingungen, wie sie von einem konventionellen Leichtmetall-Vollschaftkolben bekannt sind.

Ein solches Verhalten zeigt auch der in der EP-A-0 009 269 beschriebene Leichtmetallkolben mit gegenüber dem runden Kolbenschaftmantel zurückgesetzten Bolzennaben und mit beidseitig der horizontalen Kolbenbolzenebene zurückgesetzten, mit den Bolzennaben verbundenen Schaftwänden und, bezogen auf die die Kolbenachse und die Achse senkrecht zur Bolzenrichtung einschließende Ebene, mit unsymmetrischer Ausbildung des Kolbenschafts, wobei die Schaftwände auf der einen Seite der die Kolbenachse und die Kolbenbolzenrichtung umfassenden Ebene unter einem Winkel von 30 bis 60° und auf der anderen Seite unter einem Winkel von 90° zur Kolbenbolzenrichtung verlaufend mit dem runden Kolbenschaftmantel verbunden sind.

Es hat sich jedoch herausgestellt, daß bei dem eingangs beschriebenen Leichtmetallkolben unter bestimmten Betriebsbedingungen abhängig vom gesamten Ölhaushalt der Brennkraftmaschine eine große Ölmenge in den durch die im Bereich beidseitig der horizontalen Kolbenbolzenebene erfolgte Zurücksetzung der Bolzennaben und der damit verbundenen Schaftwände gebildeten Aussparungen angesammelt wird, die nicht schnell genug abfließen kann. Diese Ölmenge beeinträchtigt im Motorbetrieb die Rücklaufmöglichkeit des am Zylinder abgestreiften Öls durch den im unteren Ringfeld des Kolbens liegenden Ölabstreifring. Dadurch kann ein Ölstau eintreten, so daß das Öl unter Druck am Ringfeld vorbei in den Brennraum eintreten kann und dort verbrannt wird, was zu einem erhöhten Ölverbrauch der Brennkraftmaschine führt.

Außerdem ist aus der US-A-3 179 021 ein Kolben für Brennkraftmaschinen bekannt, bei dem die Bolzennaben und der Kolbenschaft auf seiner ganzen Länge beidseitig der die Kolbenachse und die senkrecht auf der Kolbenbolzenrichtung stehenden Achse einschließenden Ebene sehnenartig zurückgesetzt sind, wobei der äußere Abstand der Bolzennaben und die Breite der Kolbenschaftflächen auf der Druck- und Gegendruckseite gleich groß sind. Die schmale Schaftform eines solchen, allgemein als « Slipper-Kolben » bezeichneten Kolbens läßt jedoch nur eine begrenzte Führung des Kolbens in Kolbenbolzenrichtung zu, so daß erhebliche Abstriche bei seiner Geradführung und damit beim Geräuschverhalten und Ölverbrauch gemacht werden müssen.

Es ist die Aufgabe der vorliegenden Erfindung, den eingangs beschriebenen Leichtmetallkolben so zu gestalten, daß ein Rückstau des Öls in den durch die Zurücksetzung der Bolzennaben und der damit verbundenen beidseitig der horizontalen Kolbenbolzenebene verlaufenden Schaftwände gebildeten Aussparungen vermieden wird, jedoch seine sonstigen guten Funktions- und Festigkeitseigenschaften unter allen Betriebsbedingungen gewährleistet sind.

Die Lösung dieser Aufgabe besteht darin, daß die an die zurückgesetzten Bolzennaben und Schaftwände zum offenen Kolbenschaftende anschließenden Schaftabschnitte unterhalb der Bolzennaben gegenüber dem runden Kolbenschaftmantel so zurückgesetzt sind, daß die Breite jeder der Kolbenschaftflächen auf der Druck- bzw. Gegendruckseite größer in einer die Schaftabschnitte unterhalb der Bolzennaben schneidenden horizontalen Ebene als die Breite der gleichen der Kolbenschaftflächen auf der Druck-bzw. Gegendruckseite im Bereich beidseitig der horizontalen Kolbenbolzenebene ist und 70 bis 95 %, vorzugsweise 75 bis 85 %, des Kolbendurchmessers beträgt.

Eine besondere Ausgestaltung des erfindungsgemäß ausgebildeten Leichtmetallkolbens ist darin zu sehen, daß in den Bereichen beidseitig der horizontalen Kolbenbolzenebene und am offenen Kolbenschaftende die jeweilige Breite der Kolbenschaftfläche auf der Druckseite größer als auf der Gegendruckseite ist und am offenen Kolbenschaftende auf der Druckseite 80 bis 95 % und auf der Gegendruckseite 70 bis 90 % des Kolbendurchmessers beträgt.

Durch die erfindungsgemäßen Maßnahmen wird der Rückstau des Öls in den durch die Zurücksetzung der Bolzennaben und der damit verbundenen beidseitig der horizontalen Kolbenbolzenebene verlaufenden Schaftwände gebildeten Aussparungen verhindert. Der Leichtmetallkolben erfüllt auch durch die am offenen Kolbenschaftende gegenüber dem runden Kolbenschaftmantel zurückgesetzten Schaftabschnitte die hohen Anforderungen an Ölverbrauch, Gasdurchlaß, Geräuschverhalten und geringen Verschleiß auch nach langen Laufzeiten. Darüber hinaus wird in vorteilhafter Weise eine weitere Gewichtsreduzierung von 2 bis 6 % des Kolbengewichts, bezogen auf den eingangs beschriebenen Leichtmetallkolben, erzielt. Der erfindungsgemäß gestaltete Leichtmetallkolben kann sowohl als Einmetallkolben wie auch als Kolben mit eingegossenen Stahlregelgliedern ausgelegt werden. Dabei sind Einmetallkolben sowohl für Motoren mit Leichtmetallzylindern als auch für die Kombination von Leichtmetallgehäusen mit eingesetzten dünnwandigen Graugußbüchsen geeignet, während bei allen Saugmotoren mit Grauußgehäusen ein Leichtmetallkolben mit Stahlregelglied verwendet wird.

Die Erfindung ist in den Zeichnungen beispielhaft dargestellt und wird nachfolgend näher erläutert. Es zeigen :

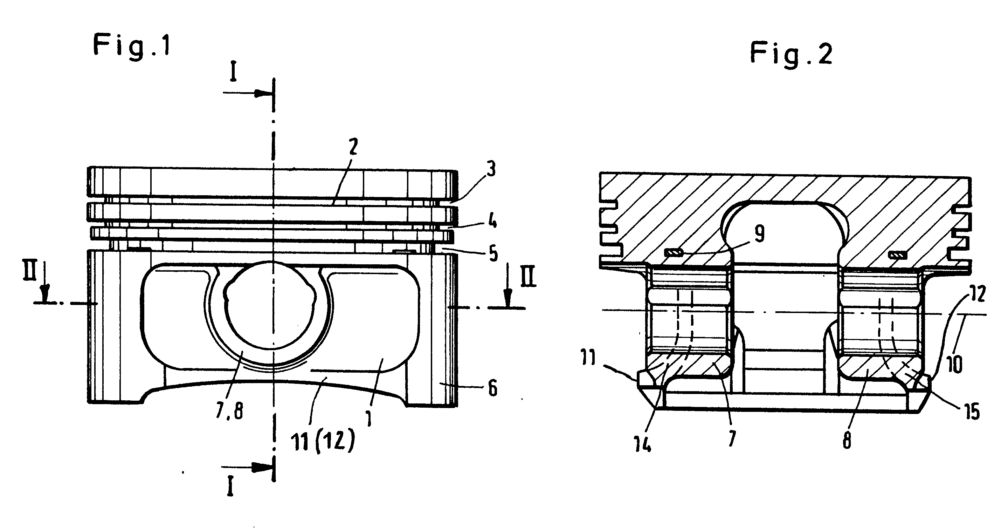

Fig. 1 eine Seitenansicht des erfindungsgemäßen Leichtmetallkolbens,

Fig. 2 einen Längsschnitt entlang der Schnittlinie I-I der Fig. 1,

Fig. 3 einen Querschnitt entlang der Schnittlinie II-II der Fig. 1,

Fig. 4 einen Querschnitt entlang der horizontalen Kolbenbolzenebene eines Leichtmetallkolbens mit unterschiedlich ausgebildeter Druck- und Gegendruckseite.

Bei einem einen Durchmesser von 86 mm und eine Bauhöhe von 56 mm aufweisenden Leichtmetallkolben (1), dessen Kolbenkopf (2) mit drei Ringnuten (3, 4, 5) versehen ist und bei dem zwischen dem Kolbenkopf (2) und dem Kolbenschaft (6) oberhalb der Bolzennaben (7, 8) ein ringförmiges Stahlregelglied (9) eingegossen ist, sind aus Gründen der Gewichtsreduzierung die Bolzennaben (7, 8) und die mit diesen verbundenen beidseitig der horizontalen Kolbenbolzenebene (10) verlaufenden Schaftwände (14, 15) unter Bildung von Aussparungen zurückgesetzt, wobei der äußere Abstand der Bolzennaben (7, 8) ca. 72 % des Kolbendurchmessers, der innere Abstand der Bolzennaben (7, 8) etwa 25 % und die Breite der einzelnen Bolzennabe (7, 8) etwa 22 % des Kolbendurchmesser betragen. Die an die zurückgesetzten Bolzennaben (7, 8) und Schaftwände (14, 15) zum offenen Kolbenschaftende angrenzenden Schaftabschnitte (11, 12) sind gegenüber dem runden Kolbenschaftmantel so zurückgesetzt, daß die Breite der Kolbenschaftflächen auf der Druck- und Gegendruckseite um 15 bis 35 % gegenüber der Breite in Kolbenbolzenebene vergrößert wird.

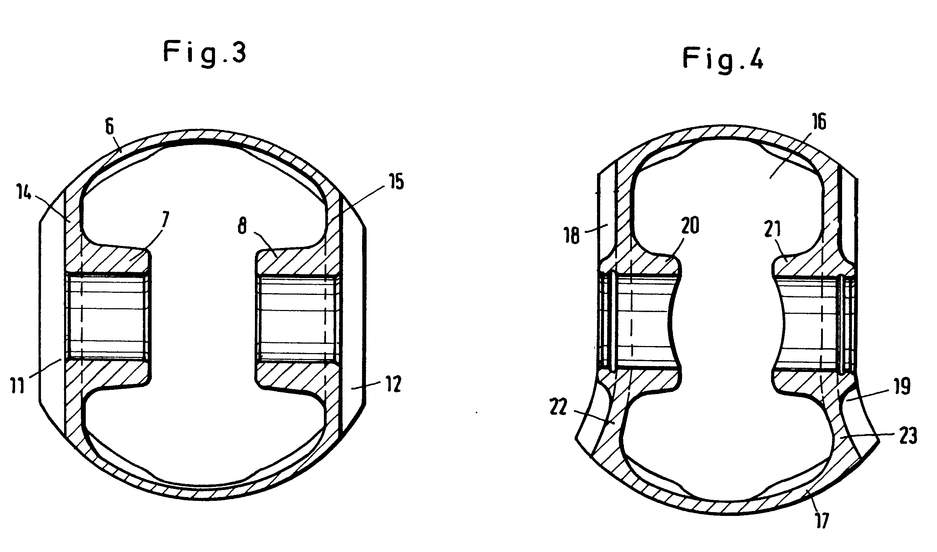

Bei dem in Fig. 4 wiedergegebenen, durch die horizontale Kolbenbolzenebene gelegten Querschnitt eines Leichtmetallkolbens (16) mit gegenüber dem runden Kolbenschaftmantel (17) zurückgesetzten Bolzennaben (20, 21) und beidseitig der horizontalen Kolbenbolzenebene zurückgesetzten, mit den Bolzennaben verbundenen Schaftwänden (22, 23) und an die zurückgesetzten Bolzennaben (20, 21) und Schaftwände (22, 23) zum offenen Kolbenschaftende angrenzenden, gegenüber dem runden Kolbenschaftmantel zurückgesetzten Schaftabschnitte (18, 19) ist in den Bereichen beidseitig der horizontalen Kolbenbolzenebene und am offenen Kolbenschaftende die Breite der Kolbenschaftflächen auf der Druckseite größer als auf der Gegendruckseite. Die mit den Bolzennaben (20, 21) und mit der Kolbenschaftfläche auf der Druckseite verbundenen Schaftwände (22, 23) bzw. Schaftabschnitte (18, 19) verlaufen bogenförmig.

## Patentansprüche

1. Leichtmetallkolben (1) für Brennkraftmaschinen mit geschlossenem Kolbenschaftmantel (6), mit gegenüber dem runden Kolbenschaftmantel zurückgesetzten Bolzennaben (7, 8) und mit beidseitig der horizontalen Kolbenbolzenebene (10) zurückgesetzten, mit den Bolzennaben verbundenen Schaftwänden (14, 15), wobei der äußere Abstand der Bolzennaben 60 bis 80 % und die Breite der Kolbenschaftflächen auf Druck- und Gegendruckseite 70 bis 95 % des Kolbendurchmessers betragen, dadurch gekennzeichnet, daß die an die zurückgesetzten Bolzennaben (7, 8) und Schaftwände (14, 15) zum offenen Kolbenschaftende anschließenden Schaftabschnitte (11, 12) unterhalb der Bolzennaben (7, 8) gegenüber dem runden Kolbenschaftmantel so zurückgesetzt sind, daß die Breite jeder der Kolbenschaftflächen auf der Druck- bzw. Gegendruckseite größer in einer die Schaftabschnitte (11, 12) unterhalb der Bolzennaben schneidenden horizontalen Ebene als die Breite der gleichen der Kolbenschaftflächen auf der Druck- bzw. Gegendruckseite im Bereich beidseitig der horizontalen Kolbenbolzenebene (10) ist und 70 bis 95 %, vorzugsweise 75 bis 85 %, des Kolbendurchmessers beträgt.

2. Leichtmetallkolben nach Anspruch 1, dadurch gekennzeichnet, daß in den Bereichen beidseitig der horizontalen Kolbenbolzenebene (10) und am offenen Kolbenschaftende die jeweilige Breite der Kolbenschaftfläche auf der Druckseite größer als auf der Gegendruckseite ist und am offenen Kolbenschaftende auf der Druckseite 80 bis 95 % und auf der Gegendruckseite 70 bis 90 % des Kolbendurchmessers beträgt.

## Claims

1. Light metal piston (1) for internal combustion engines with a closed piston skirt (6), with pin bosses (7, 8) which are recessed with respect to the round piston skirt and with skirt walls (14, 15) which are connected to the pin bosses and recessed on both sides of the horizontal plane (10) of the gudgeon pin, the external distance between the pin bosses being 60 to 80 % and the width of the piston skirt surfaces on the pressure side and back-pressure side being 70 to 95 % of the piston diameter, characterised in that the skirt sections (11, 12) adjoining the recessed pin bosses (7, 8) and skirt walls (14, 15) to the open piston skirt end beneath the pin bosses (7, 8) are recessed with respect to the round piston skirt in such a manner that the width of each of the piston skirt surfaces on the pressure side or back-pressure side respectively in a horizontal plane intersecting with the skirt sections (11, 12) beneath the pin bosses is greater than the width of the same of the piston skirt surfaces on the pressure side or back-pressure side respectively in the area on both sides of the horizontal plane (10) of the gudgeon pin and is 70 to 95 %, preferably 75 to 85 %, of the piston diameter.

2. Light metal piston according to Claim 1, characterised in that in the areas on both sides of the horizontal plane (10) of the gudgeon pin and at the open piston skirt end the width in each case of the piston skirt surface on the pressure side is greater than on the back-pressure side and at the open piston skirt end is 80 to 95 % of the piston diameter on the pressure side and 70 to 90 % on the back-pressure side.

## Revendications

1. Piston en alliage léger (1) pour des moteurs à combustion interne à jupe de piston fermée (6), à bossages d'axe de piston (7, 8) en retrait par rapport à l'enveloppe de la jupe de piston et avec des parois de jupe (14, 15) reliées aux bossages d'axe de piston et situées en retrait de part et d'autre du plan horizontal (10) de l'axe du piston, du type dans lequel la distance extérieure entre les bossages d'axe de piston est égale à 60 à 80 % du diamètre du piston alors que la largeur des surfaces de la jupe de piston, sur le côté pression et le côté contre-pression est égale à 70 à 95 % du diamètre de piston, caractérisé par le fait que les sections (11, 12) de la jupe qui font suite aux bossages d'axe de piston (7, 8) disposés en retrait ainsi que les parois (14, 15) de la jupe, vers l'extrémité ouverte de la jupe de piston, sont, en dessous des bossages d'axe de piston (7, 8) en retrait par rapport à l'enveloppe ronde de la jupe de piston de manière que la largeur de chacune des surfaces de la jupe de piston situées côté pression et côté contre-pression est plus grande dans un plan horizontal qui coupe les sections (11, 12) de la jupe en dessous des bossages d'axe de piston que la largeur des mêmes surfaces de la jupe de piston côté pression et côté contre-pression, dans la zone située de part et d'autre du plan horizontal de l'axe du piston, et est égale à 70 à 95 %, de préférence à 75 à 85 % du diamètre du piston.

2. Piston en alliage léger selon la revendication 1, caractérisé par le fait que dans les zones situées de part et d'autre du plan horizontal (10) de l'axe du piston et au niveau de l'extrémité ouverte de la jupe de piston, la largeur de la surface de la jupe de piston est plus grande du côté pression que du côté contre-pression, et elle est égale, à l'extrémité ouverte de la jupe de piston, à 80 à 95 % du diamètre du piston, côté pression, et à 70 à 90 % du diamètre du piston, côté contre-pression.

Fig.2

Fig.1

Fig.3

Fig.4

EP 0 171 825 B1